# FASCICULE DE BREVET EUROPEEN

(11) **EP 4 158 183 B1**
(45) Date de publication et mention de la délivrance du brevet: **02.07.2025**
(21) Numéro de dépôt: 21726886.1
(22) Date de dépôt: 17.05.2021
(51) Int. Cl.: F03B 17/06, B63H 9/06, B63H 9/061, B63H 9/069, B63B 21/66, B63J 3/04

(54) **DISPOSITIF DE PRODUCTION D'ÉNERGIE COMPORTANT UN BATEAU AÉROTRACTÉ TRACTANT AU MOINS UNE HYDROLIENNE**
VORRICHTUNG ZUR ENERGIEERZEUGUNG MIT EINEM MINDESTENS EINE WASSERSTROMTURBINE SCHLEPPENDEN LUFTSCHIFF
DEVICE FOR GENERATING POWER, COMPRISING AN AIR-TOWED VESSEL TOWING AT LEAST ONE WATER CURRENT TURBINE

(30) Priorité: 28.05.2020 FR 2005655
(43) Date de publication de la demande: 05.04.2023
(73) Titulaire: Airbus (S.A.S.), 31700 Blagnac (FR)
(72) Inventeur: SPERANDEI, Jean, 31700 BLAGNAC (FR); BOURRAT, Clément, 31060 TOULOUSE (FR)
(74) Mandataire: Fantin, Laurent
(86) Numéro de dépôt international: PCT/EP2021/062948
(87) Numéro de publication internationale: WO 2021/239485

(56) Documents cités:
- EP-A1- 1 199 098
- WO-A1-2008/047963
- DE-A1- 2 544 939
- FR-A1- 2 414 442
- US-A- 868 798

## Description

La présente demande se rapporte à un dispositif de production d'énergie comportant un bateau aérotracté tractant au moins une hydrolienne.

Selon un mode de réalisation connu et décrit dans le document WO2008047963, un dispositif de production d'énergie électrique comprend un bateau tracté par au moins un cerf-volant ainsi qu'une hydrolienne fixée sous la coque du bateau. Selon ce mode de réalisation, le cerf-volant utilise les vents à haute altitude qui sont forts et stables pour déplacer le bateau, l'hydrolienne fixée sous le bateau produisant de l'énergie électrique.

Ce mode de réalisation permet de produire de l'énergie électrique à bas coût. Toutefois, la quantité d'énergie produite est relativement faible.

Le document US868798 décrit un dispositif de production d'énergie comportant une hydrolienne reliée à un bateau par un câble électrique et un câble de liaison mécanique. Comme précédemment, la quantité d'énergie produite est relativement faible.

La présente invention vise à remédier à tout ou partie des inconvénients de l'art antérieur.

A cet effet, l'invention a pour objet un dispositif de production d'énergie comportant un bateau aérotracté ainsi qu'au moins une hydrolienne reliée au bateau par au moins un câble électrique et par au moins un câble de liaison mécanique afin d'être tractée par le bateau, caractérisé en ce que le dispositif de production d'énergie comprend un système de gestion des déplacements et/ou des positions des hydroliennes et/ou des supports reliant au moins deux hydroliennes.

Selon l'invention, l'hydrolienne est espacée du bateau ce qui permet d'augmenter son diamètre et de réduire les interactions entre l'hydrolienne et le bateau. De plus, il est possible de prévoir une multitude d'hydroliennes tractées par un même bateau. Le fait d'augmenter le diamètre des hydroliennes et leur nombre permet d'accroître la quantité d'énergie produite.

Selon une autre caractéristique, le dispositif de production d'énergie comprend au moins un support, relié par un câble de liaison mécanique au bateau, sur lequel sont fixées au moins deux hydroliennes.

Selon un premier mode de réalisation, le support s'étend selon une direction transversale, perpendiculaire à une direction de déplacement en fonctionnement, les hydroliennes reliées au support étant positionnées dans un même plan transversal, perpendiculaire à la direction de déplacement.

Selon un deuxième mode de réalisation, le support s'étend selon une direction longitudinale, parallèle à une direction de déplacement en fonctionnement, les hydroliennes reliées au support étant réparties en au moins deux groupes, les hydroliennes d'un premier groupe étant positionnées dans un premier plan transversal, perpendiculaire à la direction de déplacement, les hydroliennes d'un deuxième groupe étant positionnées dans un deuxième plan transversal, perpendiculaire à la direction de déplacement, le deuxième plan transversal étant parallèle et écarté du premier plan.

Selon un agencement, les hydroliennes d'un même support présentent des axes de rotation positionnés autour du support.

Selon d'autres caractéristiques, le dispositif de production d'énergie comprend :
- au moins un système de contrôle d'assiette d'au moins une hydrolienne et/ou d'au moins un support reliant au moins deux hydroliennes ;
- au moins un ballast, relié à une hydrolienne et/ou à un support reliant au moins deux hydroliennes, permettant de modifier leur flottabilité ;
- au moins un système de déplacement autonome, relié à une hydrolienne et/ou à un support reliant au moins deux hydroliennes, configuré pour contrôler les déplacements de l'hydrolienne et/ou du support ;
- un système de gestion des déplacements et/ou des positions des hydroliennes et/ou des supports reliant au moins deux hydroliennes ;
- au moins un treuil configuré pour enrouler ou dérouler au moins un câble de liaison mécanique d'au moins une hydrolienne et/ou d'au moins un support reliant au moins deux hydroliennes.

Selon une autre caractéristique, au moins une hydrolienne comprend au moins deux jeux de pales, les pales de jeux différents ayant des mouvements de rotation contrarotatifs.

Selon une autre caractéristique, le bateau comprend un système de conversion de l'énergie électrique produite par chaque hydrolienne tractée en hydrogène et/ou en carburant synthétique et/ou en toute autre énergie.

Selon une autre caractéristique, le bateau comprend au moins une aile souple, un système de contrôle de l'aile souple, suspendu sous l'aile souple, ainsi qu'une éolienne reliée au système de contrôle pour l'alimenter en énergie électrique.

Selon une autre caractéristique, le bateau est configuré pour se déplacer d'amont en aval et le dispositif de production d'énergie comprend au moins une aile positionnée en aval du bateau, un système de contrôle configuré pour modifier au moins une caractéristique de l'aile ainsi qu'un système de détermination d'au moins une caractéristique du vent en amont du bateau, le système de contrôle étant configuré pour modifier au moins une caractéristique de l'aile en fonction de la caractéristique du vent déterminée par le système de détermination. Selon une autre caractéristique, le dispositif de production d'énergie comprend une aile présentant au moins une première partie semi-rigide ou rigide et au moins une deuxième partie mobile par rapport à la première partie entre des positions plus ou moins chevauchantes, chaque deuxième partie étant configurée pour occuper au moins :
- un état rétracté, correspondant à un encombrement minimal de l'aile, prévu pour le rangement de l'aile sur le bateau ; et
- un état déployé, prévu pour l'utilisation en vol de l'aile.

Selon une autre caractéristique, le bateau comprend plusieurs ailes ainsi qu'au moins un système de manipulation configuré pour saisir une aile et la soulever pour qu'elle puisse voler, le système de manipulation comprenant au moins un préhenseur prévu pour coopérer avec un point de préhension d'une partie semi-rigide ou rigide de l'aile.

D'autres caractéristiques et avantages ressortiront de la description de l'invention qui va suivre, description donnée à titre d'exemple uniquement, en regard des dessins annexés parmi lesquels :
- La figure 1 est une représentation schématique latérale d'un dispositif de production d'énergie illustrant un mode de réalisation de l'invention,
- La figure 2 est une représentation schématique latérale d'un dispositif de production d'énergie illustrant un autre mode de réalisation de l'invention,
- La figure 3 est une représentation schématique de dessus du dispositif de production d'énergie visible sur la figure 2, en phase de production d'énergie,
- La figure 4 est une représentation schématique de dessus du dispositif de production d'énergie visible sur la figure 2, en phase de maintenance,
- La figure 5 est une vue en perspective d'un couple d'hydroliennes tracté illustrant un mode de réalisation de l'invention,
- La figure 6 est une vue de côté d'un groupe d'hydroliennes illustrant un premier mode de réalisation de l'invention,
- La figure 7 est une vue de dessus du groupe d'hydroliennes visible sur la figure 6,
- La figure 8 est une représentation schématique de dessus d'un groupe d'hydroliennes illustrant un deuxième mode de réalisation de l'invention,
- La figure 9 est une vue arrière d'un groupe d'hydroliennes illustrant un troisième mode de réalisation de l'invention,
- La figure 10 est une représentation schématique de dessus de groupes d'hydroliennes illustrant un quatrième mode de réalisation de l'invention,
- La figure 11 est une représentation schématique latérale des groupes d'hydroliennes visibles sur la figure 10, en phase de production d'énergie,
- La figure 12 est une représentation schématique latérale des groupes d'hydroliennes visibles sur la figure 10, en phase de maintenance,
- La figure 13 est une représentation schématique latérale d'un dispositif de production d'énergie illustrant un autre mode de réalisation de l'invention,
- La figure 14 est une représentation schématique latérale d'un bateau aérotracté équipé d'un système de détermination d'au moins une caractéristique du vent illustrant un mode de réalisation de l'invention,
- La figure 15 est une représentation schématique d'une aile télescopique à l'état rétracté illustrant un mode de réalisation de l'invention,
- La figure 16 est une représentation schématique de l'aile télescopique visible sur la figure 15 en cours de déploiement,
- La figure 17 est une représentation schématique de l'aile télescopique visible sur la figure 15 à l'état déployé,
- La figure 18 est une représentation schématique d'un bateau aérotracté équipé d'un système de manipulation d'une aile lors d'une étape de saisie d'une aile,
- La figure 19 est une représentation schématique du bateau aérotracté visible sur la figure 18 lors d'une étape de déploiement de l'aile,
- La figure 20 est une représentation schématique du bateau aérotracté visible sur la figure 18 lors d'une étape d'élévation par le système de manipulation de l'aile à l'état déployé,
- La figure 21 est une représentation schématique du bateau aérotracté visible sur la figure 18 lors d'une étape de saisie par le système de manipulation d'un câble principal d'une aile en vol,
- La figure 22 est une représentation schématique du bateau aérotracté visible sur la figure 18 lors d'une étape de saisie par le système de manipulation d'un câble de guidage d'une aile en vol, et
- La figure 23 est une représentation schématique du bateau aérotracté visible sur la figure 18 lors d'une étape de saisie par le système de manipulation d'une aile en vol.

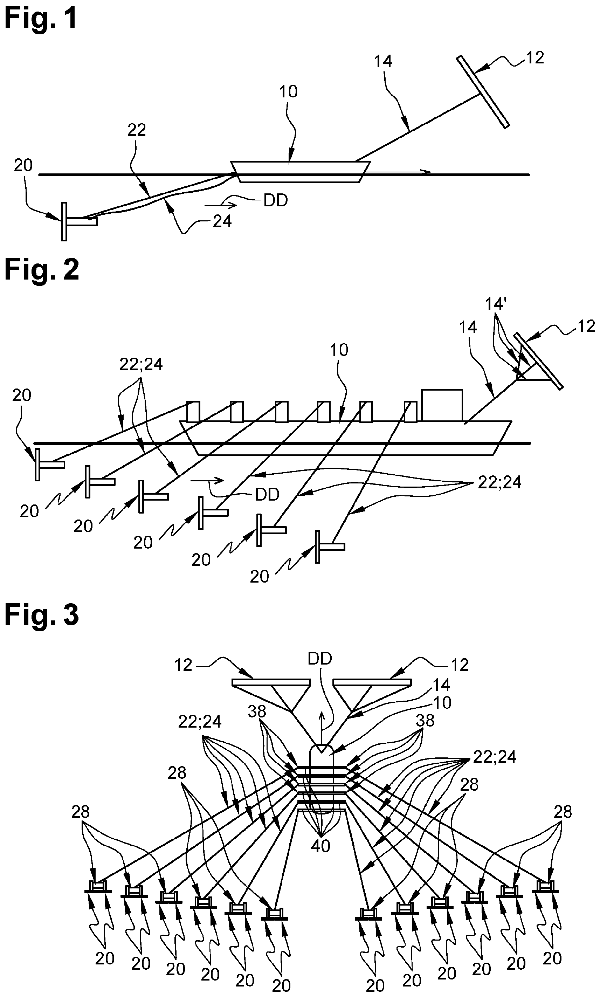

Selon un mode de réalisation visible sur les figures 1 à 4, 8, 11 à 13, un dispositif de production d'énergie comprend un bateau 10 aérotracté. Par bateau, on entend toute structure mobile à la surface de l'eau ou proche de la surface de l'eau. Par aérotracté, on entend un bateau 10 tracté par au moins un élément propulsé par le vent.

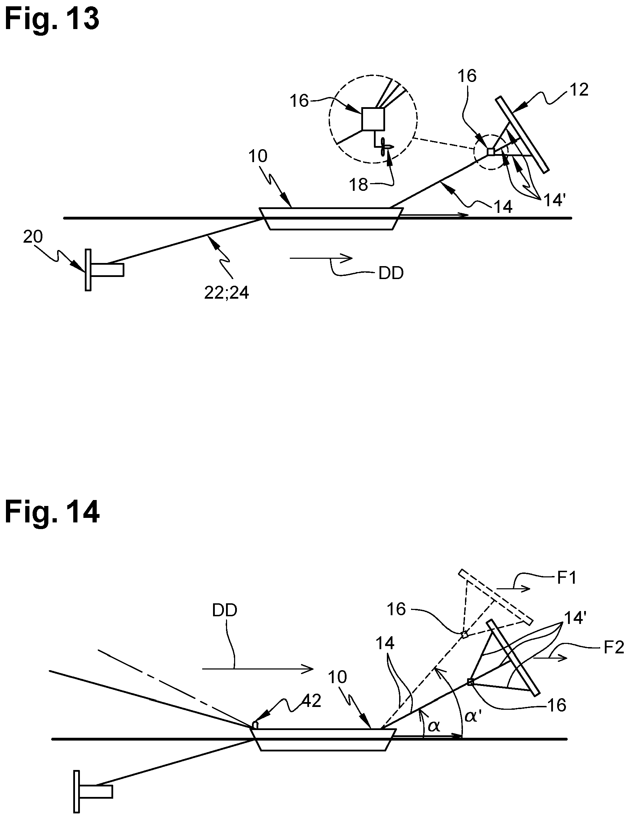

Un bateau 10 aérotracté comprend au moins une aile souple 12, également appelée aile de traction, ainsi qu'au moins un câble 14, également appelé suspente, reliant l'aile souple 12 et le bateau 10. Généralement, plusieurs suspentes 14 sont reliées à chaque aile souple 12. Selon une configuration visible sur la figure 13, le bateau 10 aérotracté comprend un système de contrôle 16 configuré pour contrôler l'aile souple 12, suspendu sous l'aile souple 12. Le système de contrôle 16 est relié au bateau 10 par un câble principal 14 ainsi qu'à l'aile souple 12 par plusieurs suspentes 14'.

Les ailes souples 12 sont privilégiées pour tracter le bateau 10 car elles utilisent les vents forts et stables présents en altitude.

L'aile souple 12, les câbles et suspentes, 14, 14' ainsi que le système de contrôle 16 ne sont pas plus décrits car ils sont connus de l'homme du métier et décrits par exemple dans le document WO2019179924.

Selon un mode de réalisation visible sur la figure 13, une éolienne 18 est reliée au système de contrôle 16 pour l'alimenter en énergie électrique. Cette éolienne 18 peut être identique à une éolienne de secours (Ram Air Turbine ou RAT en anglais) présente sur certains aéronefs.

Le système de contrôle 16 peut comprendre une batterie pour stocker l'énergie électrique en complément de l'éolienne 18. Cette éolienne 18 permet de supprimer un câble de liaison électrique entre le bateau 10 et le système de contrôle 16.

Bien entendu, l'invention n'est pas limitée aux modes de réalisation précédemment décrits pour le bateau 10 aérotracté.

Le bateau 10 se déplace selon une direction dite direction de déplacement DD lorsqu'il est tracté. Pour produire de l'énergie, le bateau 10 aérotracté est mis en mouvement sur une étendue d'eau

Le dispositif de production d'énergie comprend au moins une hydrolienne 20 immergée dans l'eau, tractée par le bateau 10, reliée au bateau 10 par au moins un câble de liaison mécanique 22 assurant la reprise des efforts mécaniques entre le bateau 10 et l'hydrolienne 20 ainsi que par au moins un câble électrique 24 pour transférer l'énergie électrique produite par l'hydrolienne 20 vers le bateau 10. Contrairement à l'art antérieur, l'hydrolienne 20 n'est pas reliée au bateau 10 par une liaison mécanique rigide.

Le câble de liaison mécanique 22 présente une longueur supérieure à 10 m, voire 100 m, pour que l'hydrolienne 20 soit écartée du bateau 10. Le câble de liaison mécanique 22 peut présenter une longueur de l'ordre d'une centaine de mètres, voire du kilomètre.

Le câble électrique 24 et le câble de liaison mécanique 22 peuvent être séparés ou rassemblés en un même faisceau.

Selon un premier mode de réalisation, le bateau 10 comprend un système de stockage de l'énergie électrique.

Selon un deuxième mode de réalisation, le bateau 10 comprend un système de conversion de l'énergie électrique produite par la (ou les) hydrolienne(s) en une autre énergie. A titre d'exemple, l'énergie électrique peut être convertie en hydrogène, par électrolyse, qui peut être utilisé pour produire un carburant synthétique grâce à un procédé chimique de catalyse de monoxyde de carbone et d'hydrogène.

Les premier et deuxième modes de réalisation peuvent être combinés. Quel que soit le mode de réalisation, le dispositif de production d'énergie peut produire de l'électricité et/ou de l'hydrogène et/ou du carburant synthétique et/ou toute autre énergie.

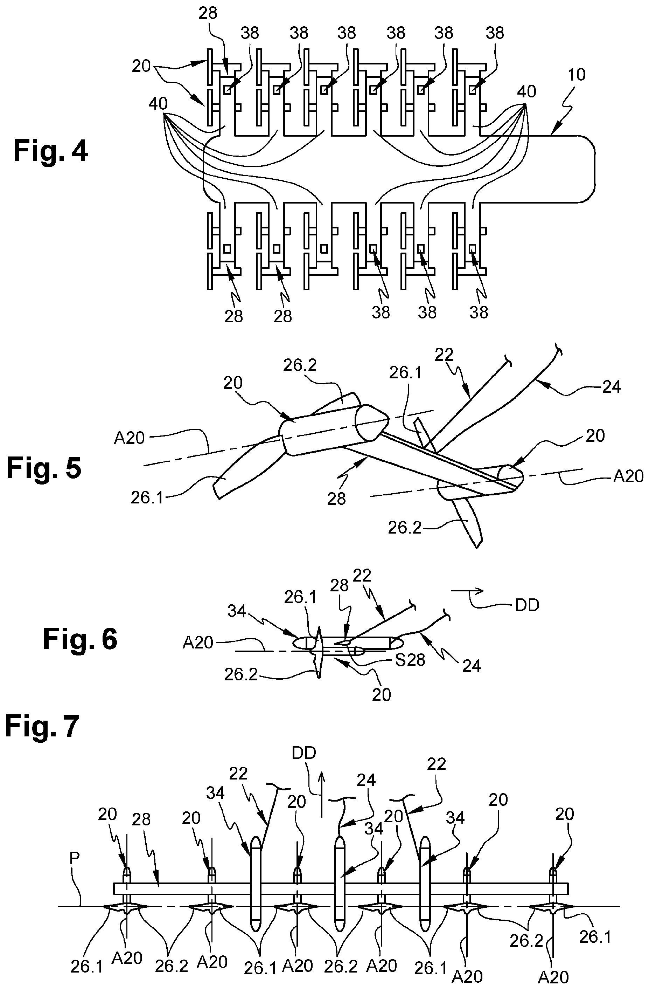

Selon un mode de réalisation visible sur les figures 5 et 6, chaque hydrolienne 20 présente un axe de rotation A20, au moins deux pales 26.1, 26.2 pivotant autour de l'axe de rotation A20 ainsi qu'une génératrice permettant de transformer l'énergie mécanique de l'axe de rotation A20 en énergie électrique. Chaque hydrolienne 20 a un profil lui permettant de réduire son coefficient aérodynamique.

Selon une configuration, au moins une hydrolienne 20 comprend au moins deux jeux de pales 26.1, 26.2, un premier jeu de pales positionnées dans un premier plan perpendiculaire à l'axe de rotation A20 ainsi qu'un deuxième jeu de pales positionnées dans un deuxième plan parallèle et espacé du premier plan, les pales des premier et deuxième jeux ayant des mouvements de rotation contrarotatifs pour limiter l'apparition d'un couple perturbateur. Selon une conception, chaque hydrolienne 20 présente un diamètre supérieur ou égal à 4 m, le diamètre de l'hydrolienne étant égal à celui du cercle décrit par l'extrémité des pales. Selon une configuration, chaque hydrolienne 20 présente un diamètre de l'ordre de 8 m, voire de 20 m. De tels diamètres sont envisageables car l'hydrolienne 20 est distante du bateau 10 et reliée à ce dernier par un câble de liaison mécanique 22.

Selon les variantes, les hydroliennes 20 peuvent être isolées les unes des autres ou regroupées par deux au moins.

A cet effet, le dispositif de production d'énergie comprend au moins un support 28, sur lequel sont fixées au moins deux hydroliennes 20, relié par un câble de liaison mécanique 22 au bateau 10.

Selon un mode de réalisation visible sur les figures 2 à 5, chaque support 28 supporte deux hydroliennes 20. Le support 28 et les hydroliennes 20 sont configurés de sorte que l'entraxe entre les deux hydroliennes 20 soit supérieur ou égal à 1,5 fois le diamètre des hydroliennes 20. Lorsque les hydroliennes 20 présentent un diamètre de l'ordre de 8 m, l'entraxe est de l'ordre de 12 m. Lorsque les hydroliennes 20 présentent un diamètre de l'ordre de 20 m, l'entraxe est de l'ordre de 30 m.

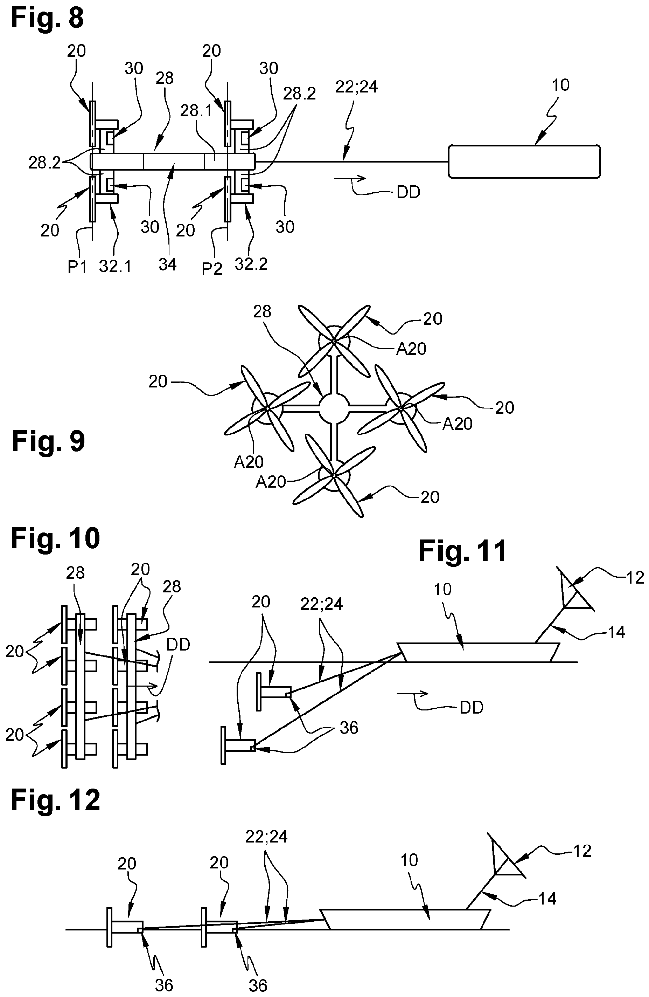

Selon des modes de réalisation visibles sur les figures 6, 7 et 10, un même support 28 peut supporter plus de deux hydroliennes 20. Selon un premier exemple illustré sur la figure 7, six hydroliennes 20 sont rapportées sur le support 28. Selon un deuxième exemple illustré sur la figure 8, quatre hydroliennes sont rapportées sur le support 28.

Les hydroliennes 20 d'un même support 28 ont des axes de rotation A20 parallèles entre eux. Selon une première configuration, les axes de rotation A20 des hydroliennes 20 d'un même support 28 sont positionnés dans un même plan, sensiblement horizontal lorsque les hydroliennes 20 sont tractées par le bateau 10. Selon une autre configuration visible sur la figure 9, les axes de rotation A20 des hydroliennes 20 d'un même support 28 sont positionnés autour du support 28. A titre d'exemple, ils peuvent être régulièrement répartis sur un cercle entourant le support 28.

Le dispositif de production d'énergie peut comprendre un unique support 28 ou plusieurs supports 28 tracté(s) par un même bateau 10.

Selon une première configuration visible sur la figure 7 par exemple, le support 28 s'étend selon une direction transversale, perpendiculaire à la direction de déplacement DD en fonctionnement, et les hydroliennes 20 reliées au support 28 sont positionnées dans un même plan transversal, perpendiculaire à la direction de déplacement DD. On considère que des hydroliennes 20 sont positionnées dans un même plan transversal lorsque les pales 26.1, 26.2 des hydroliennes 20 pivotent dans un même plan transversal P.

Selon cette première configuration, le support 28 présente une section transversale S28 avec un profil d'aile présentant un faible coefficient hydrodynamique, une section transversale correspondant à une section dans un plan contenant les directions verticale et de déplacement. Cette configuration permet de réduire les pertes générées par la traînée du support 28.

Selon une deuxième configuration visible sur la figure 8, le support 28 s'étend selon une direction longitudinale, parallèle à la direction de déplacement DD en fonctionnement, et les hydroliennes 20 reliées au support 28 sont réparties en au moins deux groupes 32.1, 32.2, les hydroliennes 20 d'un premier groupe 32.1 étant positionnées dans un premier plan transversal P1, perpendiculaire à la direction de déplacement DD, les hydroliennes 20 d'un deuxième groupe 32.2 étant positionnées dans un deuxième plan transversal P2, perpendiculaire à la direction de déplacement DD, le deuxième plan transversal P2 étant parallèle et écarté du premier plan P1.

Selon cette deuxième configuration, le support 28 comprend un corps 28.1 approximativement tubulaire qui s'étend selon la direction longitudinale et, pour chaque hydrolienne 20, un bras 28.2 qui s'étend perpendiculairement à la direction longitudinale, reliant le corps 28.1 et l'hydrolienne 20, présentant une section transversale avec un profil d'aile.

Selon un mode de réalisation visible sur la figure 8, le dispositif de production d'énergie comprend au moins un système de contrôle d'assiette d'au moins une hydrolienne 20 et/ou d'au moins un support 28 reliant au moins deux hydroliennes 20. Selon une configuration, au moins un support 28 comprend au moins une partie mobile 30 dont la position peut être modifiée par le système de contrôle d'assiette afin de pouvoir contrôler la descente ou la montée du support 28. Le fait de modifier la position de la partie mobile 30 permet également de modifier le coefficient aérodynamique du support 28, notamment sa traînée.

Selon un mode de réalisation, le dispositif de production d'énergie comprend au moins un ballast 34 relié à une hydrolienne 20 et/ou à un support 28 permettant de modifier leur flottabilité. Selon une première configuration visible sur la figure 8, le ballast 34 est intégré dans le support 28, par exemple dans son corps 28.1. Selon une deuxième configuration visible sur les figures 6 et 7, le ballast 34 est un élément distinct du support 28, fixé sur le support 28. Selon une conception, tous les supports 28 comprennent au moins un ballast 34.

Selon un mode de réalisation visible sur les figures 11 et 12, le dispositif de production d'énergie comprend au moins un système de déplacement autonome 36 relié à une hydrolienne 20 et/ou à un support 28 configuré pour contrôler les déplacements de l'hydrolienne 20 et/ou du support 28 dans un plan approximativement horizontal, comme un moteur à hélice par exemple.

Selon un mode de réalisation visible sur les figures 2 à 4, chaque hydrolienne 20 est configurée pour occuper une position éloignée du bateau 10, comme illustré sur les figures 2 et 3, correspondant notamment à une phase de production d'énergie, et une position rapprochée du bateau 10, comme illustré sur la figure 4, correspondant notamment à une phase de maintenance.

A cet effet, le dispositif de production d'énergie comprend au moins un treuil 38 configuré pour enrouler ou dérouler au moins un câble de liaison mécanique 22 d'au moins une hydrolienne 20 et/ou d'au moins un support 28.

Selon un mode de réalisation, le bateau 10 comprend plusieurs bras 40, un pour chaque hydrolienne 20, qui s'étendent selon une direction transversale (perpendiculaire à la direction de déplacement DD), de part et d'autre du bateau 10. Les bras 40 sont disposés de manière symétrique de part et d'autre du bateau 10. Chacun d'eux supporte un treuil 38 sur lequel s'enroule et se déroule un câble de liaison mécanique 22. En phase de production d'énergie, comme illustré sur la figure 3, les câbles de liaison mécanique 22 sont déroulés et les hydroliennes 20 sont écartées du bateau 10. En phase de maintenance, comme illustré sur la figure 4, les câbles de liaison mécanique 22 sont enroulés et les hydroliennes 20 sont positionnées sous les bras 40 à proximité du bateau 10, ce qui contribue à améliorer leur accessibilité.

En présence de plusieurs hydroliennes 20 isolées et/ou de plusieurs supports 28, le dispositif de production d'énergie comprend un système de gestion des déplacements et/ou des positions des hydroliennes 20 isolées et/ou des supports 28, pour éviter des collisions entre eux ou avec le bateau 10, en agissant sur les systèmes de contrôle des ballasts 34, les systèmes de déplacement autonome 36, les treuils 38 et/ou les systèmes de contrôle de l'assiette.

En phase de production, la profondeur des hydroliennes 20 ou des supports 28 est ajustée en fonction de l'effort de traction du bateau 10, de leur traînée et de leur poids. Il est possible de modifier individuellement la profondeur de chaque hydrolienne 20 isolée et/ou de chaque support 28 en contrôlant leur ballast 34 et/ou leur assiette.

La présence d'une pluralité d'hydroliennes 20 permet d'augmenter la quantité d'énergie produite.

Le fait que les hydroliennes 20 soient espacées du bateau 10 et entre elles permet de pouvoir augmenter leur diamètre et de limiter les interactions entre elles ou avec le bateau 10.

Les hydroliennes 20 n'étant pas fixées sur le bateau 10, elles peuvent être immergées à des profondeurs importantes, en phase de production, ce qui permet d'opérer dans des zones où l'impact de la houle est réduit et où les débris flottants sont moins nombreux. Les hydroliennes n'étant pas attachées à la coque du bateau, le tirant d'eau du bateau peut être réduit, ce qui facilite l'accès à des ports peu profonds.

Selon un mode de réalisation visible sur la figure 14, le bateau 10 se déplace d'amont en aval, selon la direction de déplacement DD. Ce bateau 10 est aérotracté par au moins une aile 12, positionnée à l'aval du bateau 10, reliée par des suspentes 14' à un système de contrôle 16 lui-même relié au bateau 10 par un câble principal 14. Ce système de contrôle 16 est configuré pour modifier au moins une caractéristique de l'aile 12, comme son orientation et/ou l'inclinaison de son câble principal 14 par exemple.

Le bateau 10 comprend un système de détermination 42 d'au moins une caractéristique du vent en amont du bateau 10, le système de contrôle 16 étant configuré pour modifier au moins une caractéristique de l'aile 12 en fonction de la caractéristique du vent déterminée par le système de détermination 42.

Selon une configuration, le système de détermination 42 est un système de télédétection par laser ou lidar orienté vers l'amont du bateau 10.

En l'absence de détection d'une rafale de vent par le système de détermination 42, l'aile 12 est commandée par le système de contrôle 16 de telle façon que le câble principal 14 forme un angle α par rapport à l'horizontale. L'aile 12 exerce alors une force de traction F1 sur le bateau 10 par l'intermédiaire du câble principal 14.

Lorsqu'une rafale de vent est détectée par le système de détermination 42, l'aile 12 est commandée par le système de contrôle 16 de telle façon que le câble principal 14 forme un angle α' par rapport à l'horizontale, supérieur à α. L'aile 12 exerce alors une force de traction F2 sur le bateau 10 par l'intermédiaire du câble principal 14. Etant donné que l'angle α' est supérieur à l'angle α, la force F2 est inférieure à la force F1, ce qui permet de moins solliciter l'aile 12 et le câble principal 14 lorsqu'une rafale de vent arrive au niveau de l'aile 12 et par conséquent de diminuer le risque de dégradation de l'aile 12 et du câble principal 14.

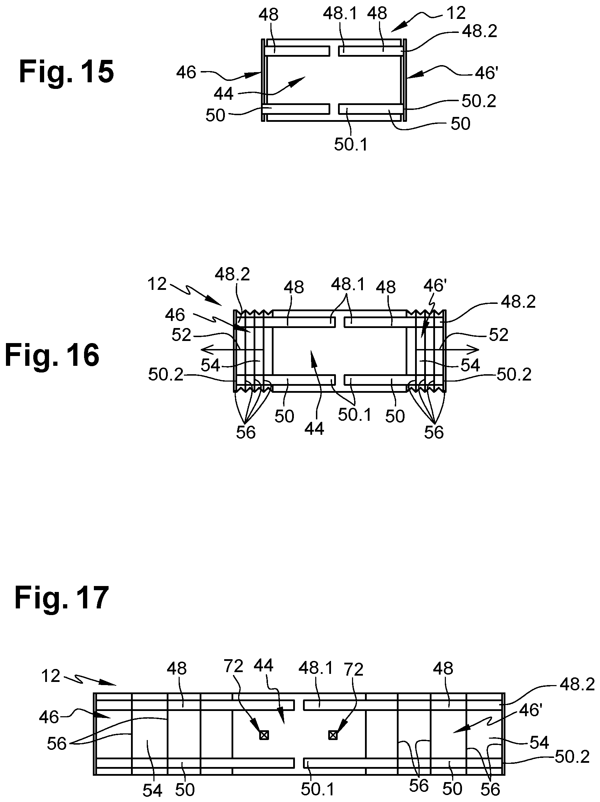

Selon un mode de réalisation visible sur les figures 15 à 17, l'aile 12 est semi-rigide ou rigide. Cette solution permet d'obtenir une aile 12 qui présente une finesse plus élevée par rapport à une aile 12 souple. Une aile 12 semi-rigide ou rigide peut fournir une puissance de 25 kW/m² pour une vitesse de vent de 10m/s (contre seulement environ 8 kW/m2 pour une aile souple classique).

Pour réduire son encombrement lorsqu'elle n'est pas utilisée, le bateau 10 comprend au moins une aile 12 présentant au moins une première partie 44 semi-rigide ou rigide et au moins une deuxième partie 46 mobile par rapport à la première partie 44 entre des positions plus ou moins chevauchantes. Selon une configuration, l'aile 12 semi-rigide ou rigide comprend une première partie 44 semi-rigide ou rigide centrale et deux deuxièmes parties 46, 46' mobiles disposées de part et d'autre de la première partie 44 centrale, chacune des deuxièmes parties 46, 46' étant configurée pour occuper un état rétracté, visible sur la figure 15, dans lequel la deuxième partie 46, 46' est partiellement logée dans la première partie 44 ou superposée à la première partie 44 et un état déployé, visible sur la figure 17, dans lequel la deuxième partie 46, 46' est positionnée à l'extérieur de la première partie 44 ou décalée par rapport à la première partie 44. L'état rétracté correspond à un encombrement minimal de l'aile. Ainsi, les deuxièmes parties sont positionnées dans l'état rétracté pour le rangement de l'aile sur le bateau, ce qui permet de faciliter le rangement de l'aile et de minimiser l'espace requis pour son rangement. L'état déployé est prévu pour l'utilisation en vol de l'aile.

Selon un mode de réalisation, chaque deuxième partie 46, 46' comprend deux bras télescopiques 48, 50 qui présentent chacun une première extrémité 48.1, 50.1 solidaire de la première partie 44 et une deuxième extrémité 48.2, 50.2 configurée pour se déplacer selon une direction de déploiement 52 entre une position rapprochée de la première extrémité 48.1, 50.1, correspondant à l'état rétracté, et une deuxième position écartée de la première extrémité 48.1, 50.1, correspondant à l'état déployé. Selon une première configuration, les bras télescopiques 48, 50 sont positionnés partiellement à l'intérieur de la première partie 44 semi-rigide ou rigide. Selon une deuxième configuration, les bras télescopiques 48, 50 sont partiellement plaqués contre une face extérieure de la première partie 44 semi-rigide ou rigide.

Chaque deuxième partie 46, 46' comprend une toile 54, reliée aux bras télescopiques 48, 50, repliée à l'état rétracté et tendue à l'état déployé.

Selon un mode de réalisation, la toile 54 est reliée aux bras télescopiques 48, 50 par l'intermédiaire de tiges 56 perpendiculaires aux bras télescopiques 48, 50 qui peuvent être métalliques ou en matériau composite.

Selon une configuration, la première partie 44 semi-rigide ou rigide et les deuxièmes parties 46, 46' sont reliées à un système de contrôle par plusieurs suspentes.

Pour donner un ordre de grandeur, l'aile 12 présente une largeur (dimension prise perpendiculairement à la direction de déploiement 52) de l'ordre de 20 m ainsi qu'une longueur (dimension prise parallèlement à la direction de déploiement 52) de l'ordre de 35 m à l'état rétracté et de 100 m à l'état déployé en présence de deux deuxièmes parties 46, 46' disposées de part et d'autre d'une première partie 44.

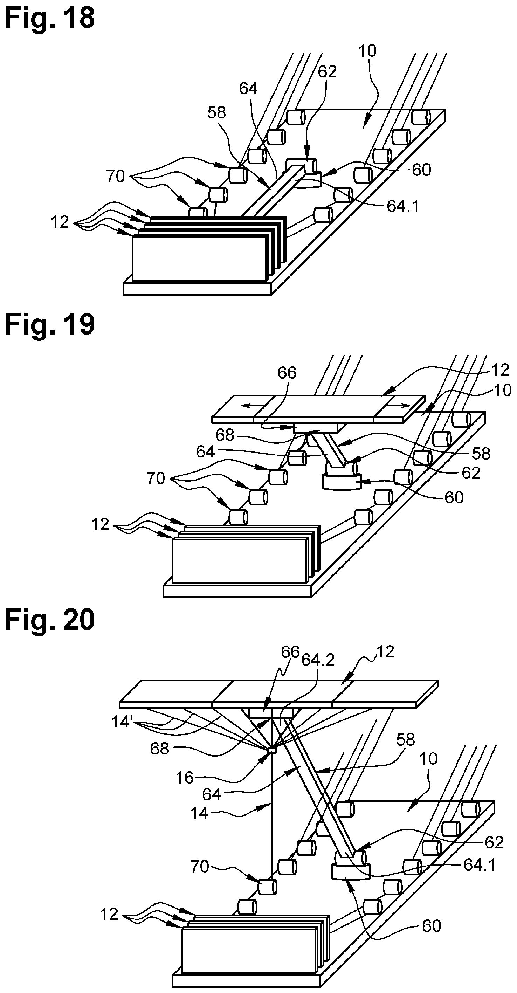

Selon un mode de réalisation visible sur les figures 18 à 23, le bateau 10 aérotracté comprend plusieurs ailes 12 ainsi qu'au moins un système de manipulation 58 configuré pour saisir une aile 12 et la soulever pour qu'elle puisse voler. Selon une conception, le système de manipulation 58 est également configuré pour saisir l'aile 12 en vol et la reposer sur le bateau 10

Selon une configuration, le système de manipulation 58 comprend un bras robotisé présentant une base 60 reliée au bateau 10 par une première articulation 62, un segment 64 dont une première extrémité 64.1 est reliée à la base 60, une tête 66 configurée pour être solidarisée de manière temporaire à au moins une aile 12 ainsi qu'une deuxième articulation 68 reliant la tête 66 à la deuxième extrémité 64.2 du segment 64.

Selon une configuration, la première articulation 62 comprend un axe de pivotement vertical et un axe de pivotement horizontal. La deuxième articulation 68 comprend au moins deux axes de pivotement orthogonaux entre eux. Le segment 64 est télescopique.

Pour chaque aile 12, le bateau 10 comprend un treuil 70 fixé sur le bateau 10, un câble principal 14, un système de contrôle 16 relié au treuil 70 par le câble principal 14 et à l'aile 12 par des suspentes 14'.

Comme illustré sur la figure 17, chaque aile 12 comprend au moins un point de préhension 72 auquel peut être reliée de manière temporaire la tête 16. Ce point de préhension 72 est de préférence disposé sur une partie semi-rigide ou rigide 44 de l'aile. Selon une configuration, la tête 66 comprend deux préhenseurs 74 prévus pour coopérer avec deux points de préhension 72 positionnés sur la partie fixe 44 de l'aile 12 semi-rigide ou rigide. Chaque aile 12 peut comprendre une partie télescopique ou non.

Selon un mode opératoire, les ailes 12 sont stockées verticalement sur le bateau 10, comme illustré sur la figure 18. Lors d'une étape de saisie, la tête 66 du système de manipulation 58 est reliée à l'aile 12. Préalablement à une étape de déploiement, visible sur la figure 19, l'aile 12 est soulevée et orientée par le système de manipulation 58. Après l'étape de déploiement de l'aile, le système de manipulation 58 élève l'aile 12 pour qu'elle puisse être prise par le vent lors d'une étape d'élévation, comme illustré sur la figure 20. En suivant, l'aile 12 est détachée du système de manipulation 58 et vole.

Pour faciliter l'accrochage des préhenseurs 74 de la tête 66 aux points de préhension 72, l'aile 12 comprend un câble de guidage 76 pour chaque point de préhension 72, reliant le système de contrôle 16 et l'aile 12, relié à l'aile 12 à proximité du point de préhension 72.

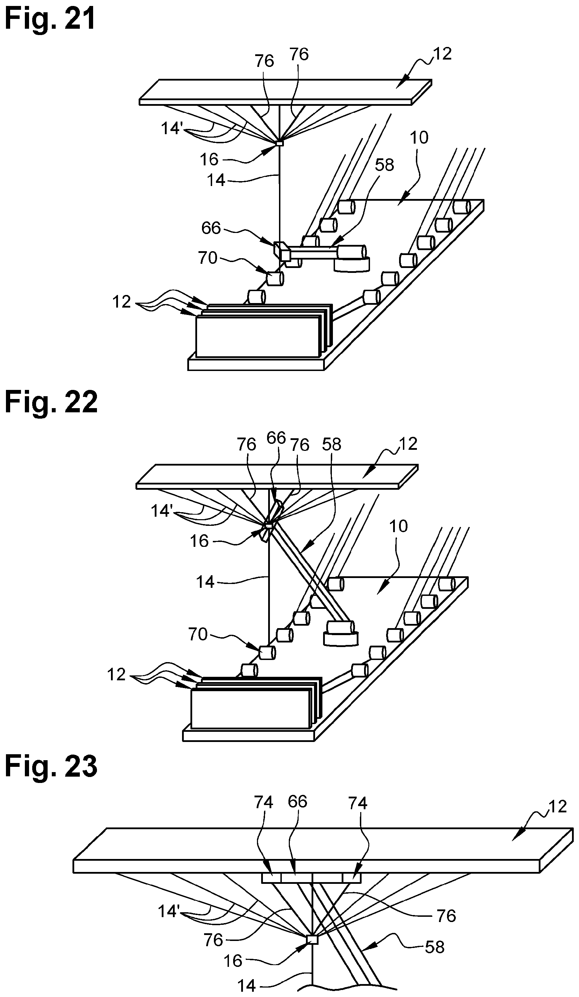

Pour récupérer l'aile 12 et la reposer sur le bateau 10, le treuil 70 est actionné de manière à ce que l'aile 12 soit à la portée de la tête 66 du système de manipulation 58, comme illustré sur la figure 21. En suivant, la tête 66 est guidée jusqu'aux points de préhension 72. Dans un premier temps, la tête 66 saisit le câble principal 14 à proximité du treuil 70, comme illustré sur la figure 21. En suivant, la tête 66 est déplacée jusqu'à atteindre le système de contrôle 16 puis jusqu'à ce qu'elle saisisse simultanément le câble principal 14 et un premier câble de guidage 76, comme illustré sur la figure 22. La tête 66 lâche alors le câble principal 14 et saisit le deuxième câble de guidage 76 puis elle est déplacée le long des câbles de guidage 76 jusqu'à venir en contact avec l'aile 12 afin que les préhenseurs 74 puissent saisir les points de préhension 72, comme illustré sur la figure 23. En variante, l'aile 12 est déplacée grâce au treuil 70 jusqu'à ce que la tête 66 soit en contact avec l'aile 12 et que les préhenseurs 74 puissent saisir les points de préhension 72. L'aile 12 est alors déplacée par le système de manipulation 58 jusqu'à sa zone de stockage sur le bateau 10.

Selon un mode particulier de réalisation non représenté sur les figures, le bateau 10 aérotracté comprend une aile gonflable. Cette aile gonflable comprend une enveloppe prévue pour être remplie d'un gaz plus léger que l'air, tel que de l'hélium par exemple. Elle comprend également un dispositif de remplissage prévu pour permettre le remplissage (ou la purge) de l'enveloppe avec ce gaz. Lorsque l'aile gonflable n'est pas utilisée pour la traction du bateau, l'enveloppe peut être repliée et rangée dans un espace approprié prévu sur le bateau. Le déploiement de l'aile en vue de son utilisation pour la traction du bateau est facilité par rapport à une aile non gonflable. En effet, lors d'un tel déploiement, l'enveloppe préalablement reliée au bateau par un câble de traction, est gonflée avec le gaz plus léger que l'air, via le dispositif de remplissage. Le câble de traction est de préférence enroulé sur un treuil. Le câble comprend une longueur libre entre le treuil et l'aile gonflable de façon à permettre le gonflage de l'aile gonflable, l'aile gonflable étant ainsi maintenue à proximité du bateau. Une fois le gonflage de l'aile gonflable terminé, l'aile gonflable se maintient en l'air à proximité du bateau, de façon autonome, étant donné que son enveloppe est remplie d'un gaz plus léger que l'air. Aucun système de manipulation n'est nécessaire pour le déploiement de l'aile : il suffit pour cela de dérouler le câble enroulé sur le treuil. De façon similaire, pour la récupération de l'aile en vue de son rangement sur le bateau, il suffit de ré-enrouler le câble sur le treuil, puis de vider le gaz contenu dans l'enveloppe lorsque l'aile est suffisamment proche du bateau. Le fait de ne pas nécessiter de système de manipulation de l'aile est très avantageux, car un tel système est cher et encombrant. Cela est d'autant plus avantageux dans le cas d'un bateau faisant partie d'un système de production d'énergie car les manœuvres de déploiement et de récupération d'une aile sont alors peu fréquentes par rapport au temps de tractage du bateau par cette aile. Une fois gonflée, du fait de la pression du gaz contenu dans l'enveloppe, l'aile présente une rigidité plus élevée que celle d'une aile souple, voisine de la rigidité d'une aile rigide ou semi-rigide, ce qui confère à l'aile gonflable des performances aérodynamiques élevées. Une telle aile gonflable peut être contrôlée au moyen d'un système de contrôle tel que le système de contrôle 16 précité (agissant sur des câbles de suspente de l'aile pour modifier sa forme), ou encore au moyen de surfaces de contrôle mobiles (par exemple des surfaces de contrôle semi-rigides).

Dans une variante du mode particulier de réalisation précité, une hydrolienne (ou un ensemble d'hydroliennes) est tractée directement par l'aile gonflable (ou par un ensemble d'ailes gonflables), sans nécessiter l'utilisation d'un bateau. Cela est rendu possible par le fait que ce type d'aile ne nécessite pas un système de manipulation pour son déploiement et sa récupération. De façon avantageuse, l'hydrolienne (ou l'ensemble d'hydroliennes) comprend alors un corps dans lequel est installé le système de conversion de l'énergie électrique produite par l'hydrolienne, en hydrogène et/ou en carburant synthétique et/ou en toute autre énergie. Un système de contrôle de l'aile gonflable (ou de l'ensemble d'ailes gonflables) peut aussi être installé dans ledit corps de l'hydrolienne. En particulier, ce corps est immergé lorsque l'hydrolienne est immergée pendant son fonctionnement.

## Revendications

1. Dispositif de production d'énergie comportant un bateau (10) aérotracté ainsi qu'au moins une hydrolienne (20) reliée au bateau (10) par au moins un câble électrique (24), l'hydrolienne (20) étant en outre reliée au bateau (10) par au moins un câble de liaison mécanique (22) afin d'être tractée par le bateau (10), **caractérisé en ce que** le dispositif de production d'énergie comprend un système de gestion des déplacements et/ou des positions des hydroliennes (20) et/ou un système de gestion des déplacements et/ou des positions de supports (28) reliant au moins deux hydroliennes (20).

2. Dispositif de production d'énergie selon la revendication 1, **caractérisé en ce que** le dispositif de production d'énergie comprend au moins un support (28), relié par le câble de liaison mécanique (22) au bateau (10), sur lequel sont fixées au moins deux hydroliennes (20).

3. Dispositif de production d'énergie selon la revendication précédente, **caractérisé en ce que** le support (28) s'étend selon une direction transversale, perpendiculaire à une direction de déplacement (DD) en fonctionnement, les hydroliennes (20) reliées au support (28) étant positionnées dans un même plan transversal, perpendiculaire à la direction de déplacement (DD).

4. Dispositif de production d'énergie selon la revendication 2, **caractérisé en ce que** le support (28) s'étend selon une direction longitudinale, parallèle à une direction de déplacement (DD) en fonctionnement, les hydroliennes (20) reliées au support (28) étant réparties en au moins deux groupes (32.1, 32.2), les hydroliennes (20) d'un premier groupe (32.1) étant positionnées dans un premier plan transversal (P1), perpendiculaire à la direction de déplacement (DD), les hydroliennes (20) d'un deuxième groupe (32.2) étant positionnées dans un deuxième plan transversal (P2), perpendiculaire à la direction de déplacement (DD), le deuxième plan transversal (P2) étant parallèle et écarté du premier plan (P1).

5. Dispositif de production d'énergie selon l'une des revendications 2 à 4, **caractérisé en ce que** les hydroliennes (20) d'un même support (28) présentent des axes de rotation (A20) positionnés autour du support (28).

6. Dispositif de production d'énergie selon l'une des revendications précédentes, **caractérisé en ce que** le dispositif de production d'énergie comprend au moins un système de contrôle d'assiette d'au moins une hydrolienne (20) et/ou d'au moins un support (28) reliant au moins deux hydroliennes (20).

7. Dispositif de production d'énergie selon l'une des revendications précédentes, **caractérisé en ce que** le dispositif de production d'énergie comprend au moins un ballast (34), relié à une hydrolienne (20) et/ou à un support (28) reliant au moins deux hydroliennes (20), permettant de modifier leur flottabilité.

8. Dispositif de production d'énergie selon l'une des revendications précédentes, **caractérisé en ce que** le dispositif de production d'énergie comprend au moins un système de déplacement autonome (36), relié à une hydrolienne (20) et/ou à un support (28) reliant au moins deux hydroliennes (20), configuré pour contrôler les déplacements de l'hydrolienne (20) et/ou du support (28).

9. Dispositif de production d'énergie selon l'une des revendications précédentes, **caractérisé en ce que** le dispositif de production d'énergie comprend au moins un treuil (38) configuré pour enrouler ou dérouler le câble de liaison mécanique (22) de l'hydrolienne (20) et/ou du support (28) reliant au moins deux hydroliennes (20).

10. Dispositif de production d'énergie selon l'une des revendications précédentes, **caractérisé en ce qu'**au moins une hydrolienne (20) comprend au moins deux jeux de pales (26.1, 26.2), les pales (26.1, 26.2) de jeux différents ayant des mouvements de rotation contrarotatifs.

11. Dispositif de production d'énergie selon l'une des revendications précédentes, **caractérisé en ce que** le bateau (10) comprend un système de conversion de l'énergie électrique produite par chaque hydrolienne (20) tractée en hydrogène et/ou en carburant synthétique et/ou en toute autre énergie.

12. Dispositif de production d'énergie selon l'une des revendications précédentes, **caractérisé en ce que** le bateau (10) comprend au moins une aile souple (12), un système de contrôle (16) de l'aile souple (12), suspendu sous l'aile souple (12), ainsi qu'une éolienne (18) reliée au système de contrôle (16) pour l'alimenter en énergie électrique.

13. Dispositif de production d'énergie selon l'une des revendications précédentes, **caractérisé en ce que** le bateau (10) est configuré pour se déplacer d'amont en aval et **en ce que** le dispositif de production d'énergie comprend au moins une aile (12) positionnée en aval du bateau (10), un système de contrôle (16) configuré pour modifier au moins une caractéristique de l'aile (12) ainsi qu'un système de détermination (42) d'au moins une caractéristique du vent en amont du bateau (10), le système de contrôle (16) étant configuré pour modifier au moins une caractéristique de l'aile (12) en fonction de la caractéristique du vent déterminée par le système de détermination (42).

14. Dispositif de production d'énergie selon l'une des revendications précédentes, **caractérisé en ce que** le dispositif de production d'énergie comprend une aile (12) présentant au moins une première partie (44) semi-rigide ou rigide et au moins une deuxième partie (46, 46') mobile par rapport à la première partie (44) entre des positions plus ou moins chevauchantes, chaque deuxième partie (46, 46') étant configurée pour occuper au moins :
- un état rétracté, correspondant à un encombrement minimal de l'aile (12), prévu pour le rangement de l'aile sur le bateau (10) ; et
- un état déployé, prévu pour l'utilisation en vol de l'aile (12).

15. Dispositif de production d'énergie selon l'une des revendications précédentes, **caractérisé en ce que** le bateau (10) comprend plusieurs ailes (12) ainsi qu'au moins un système de manipulation (58) configuré pour saisir une aile (12) et la soulever pour qu'elle puisse voler, le système de manipulation comprenant au moins un préhenseur (74) prévu pour coopérer avec un point de préhension (72) d'une partie semi-rigide ou rigide (44) de l'aile (12).

## Patentansprüche

1. Energieerzeugungsvorrichtung mit einem luftgezogenen Schiff (10) sowie wenigstens einer Wasserkraftanlage (20), die mit dem Schiff (10) über wenigstens ein elektrisches Kabel (24) verbunden ist, wobei die Wasserkraftanlage (20) mit dem Schiff (10) über wenigstens ein mechanisches Verbindungskabel (22) verbunden ist, um von dem Schiff (10) gezogen zu werden, **dadurch gekennzeichnet, dass** die Energieerzeugungsvorrichtung ein System zur Steuerung der Bewegungen und/oder Positionen der Wasserkraftanlage (20) und/oder ein System zur Steuerung der Bewegungen und/oder Positionen von Trägern (28) aufweist, die wenigstens zwei Wasserkraftanlage (20) verbinden.

2. Energieerzeugungsvorrichtung nach Anspruch 1, **dadurch gekennzeichnet, dass** die Energieerzeugungsvorrichtung wenigstens einen Träger (28) umfasst, der über das mechanische Verbindungskabel (22) mit dem Schiff (10) verbunden ist und an dem wenigstens zwei Wasserkraftanlagen (20) befestigt sind.

3. Energieerzeugungsvorrichtung nach dem vorhergehenden Anspruch, **dadurch gekennzeichnet, dass** sich der Träger (28) in einer Querrichtung im rechten Winkel zu einer Bewegungsrichtung (DD) im Betrieb erstreckt, wobei die mit dem Träger (28) verbundenen Wasserkraftanlagen (20) in einer gleichen Querebene im rechten Winkel zur Bewegungsrichtung (DD) positioniert sind.

4. Energieerzeugungsvorrichtung nach Anspruch 2, **dadurch gekennzeichnet, dass** sich der Träger (28) in eine Längsrichtung parallel zu einer Bewegungsrichtung (DD) im Betrieb erstreckt, wobei die mit dem Träger (28) verbundenen Wasserkraftanlage (20) in wenigstens zwei Gruppen (32.1, 32.2) aufgeteilt sind, wobei die Wasserkraftanlagen (20) einer ersten Gruppe (32.1) in einer ersten Querebene (P1) im rechten Winkel zur Bewegungsrichtung (DD) positioniert sind und die Wasserkraftanlagen (20) einer zweiten Gruppe (32.2) in einer zweiten Querebene (P2) im rechten Winkel zur Bewegungsrichtung (DD) positioniert sind, wobei die zweite Querebene (P2) parallel zur ersten Ebene (P1) ausgerichtet und von dieser beabstandet ist.

5. Energieerzeugungsvorrichtung nach einem der Ansprüche 2 bis 4, **dadurch gekennzeichnet, dass** die Wasserkraftanlage (20) eines einzelnen Trägers (28) Drehachsen (A20) aufweisen, die um den Träger (28) herum angeordnet sind.

6. Energieerzeugungsvorrichtung nach einem der vorhergehenden Ansprüche, **dadurch gekennzeichnet, dass** die Energieerzeugungsvorrichtung wenigstens ein System zur Steuerung der Trimmung wenigstens einer Wasserkraftanlage (20) und/oder wenigstens eines Trägers (28) aufweist, der wenigstens zwei Wasserkraftanlagen (20) verbindet.

7. Energieerzeugungsvorrichtung nach einem der vorhergehenden Ansprüche, **dadurch gekennzeichnet, dass** die Energieerzeugungsvorrichtung wenigstens einen Ballast (34) aufweist, der mit einer Wasserkraftanlage (20) und/oder mit einem Träger (28) verbunden ist, der wenigstens zwei Wasserkraftanlagen (20) verbindet und es ermöglicht, deren Auftrieb zu verändern.

8. Energieerzeugungsvorrichtung nach einem der vorhergehenden Ansprüche, **dadurch gekennzeichnet, dass** die Energieerzeugungsvorrichtung wenigstens ein autonomes Bewegungssystem (36) umfasst, das mit einer Wasserkraftanlagen (20) und/oder einem Träger (28) verbunden ist, der wenigstens zwei Wasserkraftanlagen (20) verbindet, und das so eingerichtet ist, dass es die Bewegungen der Wasserkraftanlagen (20) und/oder des Trägers (28) steuert.

9. Energieerzeugungsvorrichtung nach einem der vorhergehenden Ansprüche, **dadurch gekennzeichnet, dass** die Energieerzeugungsvorrichtung wenigstens eine Winde (38) umfasst, die dazu eingerichtet ist, das mechanische Verbindungskabel (22) der Wasserkraftanlage (20) und/oder des Trägers (28), der wenigstens zwei Wasserkraftanlagen (20) verbindet, auf- und abzuwickeln.

10. Energieerzeugungsvorrichtung nach einem der vorhergehenden Ansprüche, **dadurch gekennzeichnet, dass** wenigstens eine Wasserkraftanlage (20) wenigstens zwei Sätze von Blättern (26.1, 26.2) umfasst, wobei die Blätter (26.1, 26.2) aus unterschiedlichen Sätzen gegenläufige Drehbewegungen aufweisen.

11. Energieerzeugungsvorrichtung nach einem der vorhergehenden Ansprüche, **dadurch gekennzeichnet, dass** das Schiff (10) ein System zur Umwandlung der von jeder gezogenen Wasserkraftanlage (20) erzeugten elektrischen Energie in Wasserstoff und/oder synthetischen Treibstoff und/oder jede andere Energie aufweist.

12. Energieerzeugungsvorrichtung nach einem der vorhergehenden Ansprüche, **dadurch gekennzeichnet, dass** das Schiff (10) wenigstens einen flexiblen Flügel (12) und ein Steuersystem (16) für den flexiblen Flügel (12) aufweist, das unter dem flexiblen Flügel (12) aufgehängt ist, sowie eine Windkraftanlage (18) aufweist, die mit dem Steuersystem (16) verbunden ist, um es mit elektrischer Energie zu versorgen.

13. Energieerzeugungsvorrichtung nach einem der vorhergehenden Ansprüche, **dadurch gekennzeichnet, dass** das Schiff (10) so eingerichtet ist, dass es sich von stromaufwärts nach stromabwärts bewegt, und dass die Energieerzeugungsvorrichtung wenigstens einen Flügel (12) umfasst, der stromabwärts des Schiffes (10) angeordnet ist, ein Steuersystem (16), das so eingerichtet ist, dass es wenigstens eine Eigenschaft des Flügels (12) modifiziert, sowie ein System (42) zur Bestimmung wenigstens einer Eigenschaft des Windes stromaufwärts des Schiffes (10) aufweist, wobei das Steuersystem (16) so eingerichtet ist, dass es wenigstens eine Eigenschaft des Flügels (12) in Abhängigkeit von der durch das Bestimmungssystem (42) bestimmten Eigenschaft des Windes modifiziert.

14. Energieerzeugungsvorrichtung nach einem der vorhergehenden Ansprüche, **dadurch gekennzeichnet, dass** die Energieerzeugungsvorrichtung einen Flügel (12) umfasst, der wenigstens einen ersten halbsteifen oder steifen Teil (44) und wenigstens einen zweiten Teil (46, 46') aufweist, der in Bezug auf den ersten Teil (44) zwischen mehr oder weniger überlappenden Positionen beweglich ist, wobei jeder zweite Teil (46, 46') so eingerichtet ist, dass er wenigstens:
- - einen eingezogenen Zustand, der einem minimalen Platzbedarf des Flügels (12) entspricht und für die Aufbewahrung des Flügels auf dem Schiff (10) vorgesehen ist, einnimmt und
- - einen entfalteten Zustand einnimmt, der für die Verwendung des Flügels (12) im Flug vorgesehen ist.

15. Energieerzeugungsvorrichtung nach einem der vorhergehenden Ansprüche, **dadurch gekennzeichnet, dass** das Schiff (10) mehrere Flügel (12) sowie wenigstens ein Handhabungssystem (58) umfasst, das so eingerichtet ist, dass es einen Flügel (12) ergreift und ihn anhebt, damit er fliegen kann, wobei das Handhabungssystem wenigstens einen Greifer (74) umfasst, der dazu vorgesehen ist, mit einem Greifpunkt (72) eines halbsteifen oder steifen Teils (44) des Flügels (12) zusammenzuwirken.

## Claims

1. Device for producing energy having an air-towed vessel (10) and at least one water current turbine (20) linked to the vessel (20) by at least one electric cable (24), the water current turbine (20) being further linked to the vessel (10) by at least one mechanical linking cable (22) in order to be towed by the vessel (10), **characterized in that** the device for producing energy comprises a system for managing the movements and/or positions of the water current turbines (20) and/or a system for managing the movements and/or positions of the supports (28) connecting at least two water current turbines (20).

2. Device for producing energy as claimed in claim 1, **characterized in that** the device for producing energy comprises at least one support (28), linked to the vessel (10) by the mechanical linking cable (22), to which at least two water current turbines (20) are secured.

3. Device for producing energy as claimed in the preceding claim, **characterized in that** the support (28) extends along a transverse direction, perpendicular to a direction of movement (DD) in operation, the water current turbines (20) connected to the support (28) being positioned in one and the same transverse plane, perpendicular to the direction of movement (DD).

4. Device for producing energy as claimed in claim 2, **characterized in that** the support (28) extends along a longitudinal direction, parallel to a direction of movement (DD) in operation, the water current turbines (20) connected to the support (28) being distributed in at least two groups (32.1, 32.2), the water current turbines (20) of a first group (32.1) being positioned in a first transverse plane (P1), perpendicular to the direction of movement (DD), the water current turbines (20) of a second group (32.2) being positioned in a second transverse plane (P2), perpendicular to the direction of movement (DD), the second transverse plane (P2) being parallel to and at a distance from the first plane (P1).

5. Device for producing energy as claimed in one of claims 2 to 4, **characterized in that** the water current turbines (20) of one and the same support (28) have axes of rotation (A20) positioned around the support (28).

6. Device for producing energy as claimed in one of the preceding claims, **characterized in that** the device for producing energy comprises at least one system for controlling the pitch of at least one water current turbine (20) and/or of at least one support (28) connecting at least two water current turbines (20).

7. Device for producing energy as claimed in one of the preceding claims, **characterized in that** the device for producing energy comprises at least one ballast (34), connected to the water current turbine (20) and/or to a support (28) connecting at least two water current turbines (20), making it possible to modify their buoyancy.

8. Device for producing energy as claimed in one of the preceding claims, **characterized in that** the device for producing energy comprises at least one autonomous movement system (36), connected to a water current turbine (20) and/or to a support (28) connecting at least two water current turbines (20), which is configured to control the movements of the water current turbine (20) and/or of the support (28).

9. Device for producing energy as claimed in one of the preceding claims, **characterized in that** the device for producing energy comprises at least one winch (38) configured to wind up or unwind at least one mechanical linking cable (22) of at least one water current turbine (20) and/or of at least one support (28) connecting at least two water current turbines (20).

10. Device for producing energy as claimed in one of the preceding claims, **characterized in** hat at least one water current turbine (20) comprises at least two sets of blades (26.1, 26.2), the blades (26.1, 26.2) of different sets having counter-rotating rotational movements.

11. Device for producing energy as claimed in one of the preceding claims, **characterized in that** the vessel (10) comprises a system for converting the electrical energy produced by each towed water current turbine (20) into hydrogen and/or synthetic fuel and/or any other energy.

12. Device for producing energy as claimed in one of the preceding claims, **characterized in that** the vessel (10) comprises at least one flexible wing (12), a system (16) for controlling the flexible wing (12), suspended under the flexible wing (12), and a wind turbine (18) connected to the control system (16) to supply it with electrical energy.

13. Device for producing energy as claimed in one of the preceding claims, **characterized in that** the vessel (10) is configured to move from upstream to downstream, and **in that** the device for producing energy comprises at least one wing (12) positioned downstream of the vessel (10), a control system (16) configured to modify at least one characteristic of the wing (12), and a system (42) for determining at least one characteristic of the wind upstream of the vessel (10), the control system (16) being configured to modify at least one characteristic of the wing (12) depending on the characteristic of the wind determined by the determining system (42).

14. Device for producing energy as claimed in one of the preceding claims, **characterized in that** the device for producing energy comprises a wing (12) having at least one semi-rigid or rigid first part (44) and at least one second part (46, 46') that is movable with respect to the first part (44) between more or less overlapping positions, each second part (46, 46') being configured to take up at least:
- a retracted state, corresponding to a minimum size of the wing (12), intended for stowing the wing on the vessel (10); and
- a deployed state, intended for using the wing (12) in flight.

15. Device for producing energy as claimed in one of the preceding claims, **characterized in that** the vessel (10) comprises a plurality of wings (12) and at least one handling system (58) configured to grasp a wing (12) and raise it so that it can fly, the manipulating system comprising at least one gripper (74) intended to cooperate with a gripping point (72) of a semi-rigid or rigid part (44) of the wing (12).
